# EUROPEAN PATENT APPLICATION

(11) **EP 4 478 082 A1**
(43) Date of publication of application: **18.12.2024**
(21) Application number: 22927782.7
(22) Date of filing: 25.02.2022
(51) Int. Cl.: G01S 7/481, G01S 17/02, G01S 17/93

(54) **CONTROL METHOD AND LASER RADAR**

(71) Applicant: Huawei Technologies Co., Ltd., Shenzhen, Guangdong 518129 (CN)
(72) Inventor: QIN, Jiarong, Shenzhen, Guangdong 518129 (CN); WANG, Shuai, Shenzhen, Guangdong 518129 (CN); YU, Anliang, Shenzhen, Guangdong 518129 (CN); CAI, Zhonghua, Shenzhen, Guangdong 518129 (CN); WANG, Wei, Shenzhen, Guangdong 518129 (CN)
(74) Representative: MERH-IP Matias Erny Reichl Hoffmann Patentanwälte PartG mbB
(86) International application number: PCT/CN2022/078042
(87) International publication number: WO 2023/159499

(57) **Abstract**

This application discloses a control method and a lidar. The lidar provided in this application includes receiving modules with a plurality of different field of views, for example, a first receiving module and a second receiving module. A field of view corresponding to the first receiving module is different from a field of view corresponding to the second receiving module. According to the control method provided in this application, the receiving modules with the plurality of different field of views cooperate, so that the lidar has a high ranging capability, high resolution, and a large field of view, to meet different requirements on the field of view in different scenarios.

## Description

### TECHNICAL FIELD

This application relates to the field of detection technologies, and in particular, to a control method and a lidar.

### BACKGROUND

Currently, a ranging capability of a terminal device (like a lidar) with a detection capability cannot be optimized synchronously with a field of view (Field of View, FoV) and angular resolution. For example, when the field of view of the lidar is designed to be large, the angular resolution is low, the ranging capability is low, and a fine point cloud image cannot be obtained; or when the field of view of the lidar is designed to be small, the angular resolution is high, the ranging capability is high, but a range of a detection region corresponding to the lidar is small. However, in some detection scenarios (for example, a vehicle-mounted scenario), there are high requirements on the ranging capability, the angular resolution, and the field of view of the lidar. Therefore, how to synchronously optimize ranging capabilities, angular resolution, and field of views of various terminal devices including the lidar is an urgent technical problem to be resolved.

### SUMMARY

This application provides a control method and a lidar, to synchronously optimize ranging capabilities, angular resolution, and field of views of various terminal devices including the lidar, to meet requirements in different scenarios.

According to a first aspect, an embodiment of this application provides a control method, which may be applied to a terminal device having a detection capability. For example, the method is applied to a lidar. The lidar includes a transmitting module and at least two receiving modules, and the at least two receiving modules include a first receiving module and a second receiving module. The method includes: controlling the transmitting module to transmit a detection signal; and controlling the first receiving module to receive a first detection signal, and controlling the second receiving module to receive a second detection signal. The detection signal includes the first detection signal and the second detection signal, and a field of view corresponding to the first receiving module is different from a field of view corresponding to the second receiving module.

In this embodiment of this application, the lidar cooperates with receiving modules (namely, the first receiving module and the second receiving module) of different field of views. A receiving module with a larger field of view may enable the lidar to have a larger field of view, and a receiving module with a smaller field of view may enable the lidar to have a higher angular resolution and a longer ranging distance. Therefore, the lidar can have a high ranging capability, a high resolution, and a large field of view at the same time, further to meet requirements in different scenarios.

In a possible design, the first receiving module may be controlled to receive the first detection signal in a first time period, and the second receiving module may be controlled to receive the second detection signal in a second time period. The first time period and the second time period may be the same, or may be different. In other words, the first receiving module and the second receiving module may work at the same time, or may not work at the same time. This is not limited in this embodiment of this application.

In this design, the first receiving module and the second receiving module can be precisely controlled by controlling working sequences of the first receiving module and the second receiving module with cooperating with the first receiving module and the second receiving module, to improve reliability of the solution.

In a possible design, the first time period and the second time period are different, and the first time period and the second time period may partially overlap. In other words, in some time, the first receiving module and the second receiving module work at the same time, and in the other time, the first receiving module and the second receiving module do not work at the same time.

In this design, working sequences of the first receiving module and the second receiving module are partially overlapped, so that point cloud data can be properly increased while specific spatial sampling precision is ensured, thereby improving accuracy of target identification of the lidar.

In another possible design, the first time period is different from the second time period, and the first time period and the second time period do not overlap. In other words, only one of the first receiving module and the second receiving module works at any moment.

In this design manner, the working sequences of the first receiving module and the second receiving module are staggered, so that spatial sampling precision of the lidar can be improved, and accuracy of target identification of the lidar can be improved.

In a possible design, the first time period may be further configured to appear within a first preset time range according to a first rule, and the second time period may be further configured to appear within a second preset time range according to a second rule.

In this design manner, the working sequences of the first receiving module and the second receiving module may be regular, and this helps reduce complexity of controlling the working sequence of the first receiving module and the working sequence of the second receiving module.

In a possible design, the first rule is using first duration as a periodicity, and/or the second rule is using second duration as a periodicity, where the first duration is the same as or different from the second duration.

In this design manner, the first receiving module can periodically receive the first detection signal, and the second receiving module can periodically receive the second detection signal. This helps increase a data volume of the point cloud data, and further improve accuracy of target identification of the lidar.

In a possible design, the first preset time range is the same as the second preset time range, and the first preset time range includes at least one first sub-range and at least one second sub-range. The first rule is that a receiving frequency of the first detection signal in the at least one first sub-range is lower than a receiving frequency of the first detection signal in the at least one second sub-range, in other words, a periodicity of a first time period in the at least one first sub-range is greater than a periodicity of a first time period in the second sub-range; and/or the second rule is that a receiving frequency of the second detection signal in the at least one first sub-range is lower than a receiving frequency of the second detection signal in the at least one second sub-range, in other words, a periodicity of a second time period in the at least one first sub-range is greater than a periodicity of a second time period in the second sub-range.

In this design manner, because the receiving frequency of the first detection signal in the first sub-range of the lidar is lower than the receiving frequency of the first detection signal in the second sub-range, and/or the receiving frequency of the second detection signal in the first sub-range of the lidar is lower than the receiving frequency of the second detection signal in the second sub-range, the lidar receives more detection signals from a target in the second sub-range than the detection signals received from a target in the first sub-range. In this way, a point cloud image collected by the lidar in the second sub-range can be more refined. For example, if the point cloud image collected by the lidar in the second sub-range is just a point cloud image of a region of interest, this design can effectively improve accuracy of identifying the region of interest by the lidar.

In a possible design, the transmitting module may be controlled to transmit a detection signal that is consecutive in time domain. For example, the transmitting module may be always in a working state, and continuously transmit a laser pulse to the outside.

In this design manner, it can be ensured that a detection region can always reflect the detection signal to the lidar, so that the first receiving module and the second receiving module can receive a detection signal returned from the detection region provided that the first receiving module and the second receiving module are in the working state. This helps improve target identification efficiency of the lidar.

In a possible design, the transmitting module may be controlled to transmit the first detection signal in the first time period, and the transmitting module may be controlled to transmit the second detection signal in the second time period. The first time period is different from the second time period. In other words, the transmitting module transmits the first detection signal in the first time period, the first receiving module receives, in the first time period, a first detection signal reflected from the target, the transmitting module transmits the second detection signal in the second time period, and the second receiving module receives, in the second time period, a second detection signal reflected from the target.

In this design manner, a working sequence of the transmitting module matches the working sequence of the first receiving module and the working sequence of the second receiving module, so that power consumption of the transmitting module can be reduced while it is ensured that the first receiving module and the second receiving module work normally.

In a possible design, the field of view corresponding to the first receiving module is greater than the field of view corresponding to the second receiving module, or angular resolution corresponding to the first receiving module is lower than angular resolution corresponding to the second receiving module, or a detection distance corresponding to the first receiving module is less than a detection distance corresponding to the second receiving module. When a first region is scanned, the first receiving module may be controlled to receive the first detection signal, and the second receiving module may be controlled to receive the second detection signal. When a second region is scanned, the first receiving module may be controlled to receive the first detection signal, and the second receiving module may be controlled not to work. The first region is different from the second region. For example, the first region is the region of interest, and the second region is a non-region of interest.

In this design manner, the lidar uses both the first receiving module and the second receiving module in the first region, so that a point cloud image collected by the lidar in the first region is more refined, to further improve identification accuracy of the first region by the lidar.

In a possible design, the transmitting module is one transmitting module, and the controlling the transmitting module to transmit a detection signal includes: controlling the transmitting module to transmit the first detection signal and the second detection signal.

In this design manner, detection signals received by the first receiving module and the second receiving module are sent by a same transmitting module, so that design costs can be reduced.

In another possible design, that the transmitting module includes a first transmitting module and a second transmitting module, and the controlling the transmitting module to transmit a detection signal includes: controlling the first transmitting module to transmit the first detection signal, and controlling the second transmitting module to transmit the second detection signal.

In this design manner, the first receiving module and the second receiving module respectively correspond to different transmitting modules, so that a sequence design can be more flexible.

In a possible design, the first receiving module may include a first detector, and the second receiving module may include a second detector. Correspondingly, the controlling the first receiving module to receive the first detection signal, and controlling the second receiving module to receive the second detection signal may include: controlling the first detector to receive the first detection signal from an optical system, and controlling the second detector to receive the second detection signal from the optical system.

In this design manner, different detectors are designed for different receiving modules, and an implementation is simple and reliable.

In a possible design, the optical system includes a polygon mirror; and the first detection signal is reflected by a first reflective surface of the polygon mirror, and the second detection signal is reflected by a second reflective surface of the polygon mirror.

In this design manner, different detection signals are transmitted to different detectors by using the polygon mirror, and design costs are low and implementation is easy.

In a possible design, the optical system may further include a beam splitter; and the first detection signal is further reflected or transmitted by the beam splitter; or the second detection signal is further reflected or transmitted by the beam splitter.

In this design manner, a transmitting optical path and a receiving optical path can be coaxial and/or paraxial by using the beam splitter. For example, when a detection signal (including a first detection signal and a second detection signal) is emitted from a laser, the detection signal may be first reflected by a beam splitter, then reflected by a first reflective surface of a polygon mirror, and finally arrive at a target. A part (for example, the first detection signal) of the detection signal returned by the target is reflected by the first reflective surface of the polygon mirror, then transmitted by the beam splitter, and finally enters the first detector. A return path of the first detection signal overlaps a transmission path, that is, the transmitting optical path and the receiving optical path are coaxial; the other part (for example, the second detection signal) enters the second detector after being reflected by the second reflective surface of the polygon mirror, and a return path and a transmitting path of the second detection signal do not overlap, that is, the transmitting optical path and the receiving optical path are paraxial. Certainly, this is merely an example. Actually, there may be another optical path design manner.

In a possible design, the optical system includes an oscillating mirror. When the oscillating mirror is at a first angle, the first detection signal is reflected by the oscillating mirror; or when the oscillating mirror is at a second angle, the second detection signal is reflected by the oscillating mirror.

In this design manner, different detection signals are transmitted to different detectors by changing an angle of the oscillating mirror and time, and design costs are low and implementation is easy.

According to a second aspect, an embodiment of this application provides a lidar, including a control apparatus, a transmitting module, and at least two receiving modules (including a first receiving module and a second receiving module).

The control apparatus is configured to perform the method according to any one of the first aspect or the possible designs of the first aspect. The transmitting module is configured to transmit a detection signal; the first receiving module is configured to receive a first detection signal; and the second receiving module is configured to receive a second detection signal, where the detection signal includes the first detection signal and the second detection signal, and a field of view corresponding to the first receiving module is different from a field of view corresponding to the second receiving module.

In a possible design, that the transmitting module is one transmitting module, and the controlling the transmitting module to transmit a detection signal includes: controlling the transmitting module to transmit the first detection signal and the second detection signal; or that the transmitting module includes a first transmitting module and a second transmitting module, and controlling the transmitting module to transmit a detection signal includes: controlling the first transmitting module to transmit the first detection signal.

In a possible design, the first receiving module includes a first detector, and the second receiving module includes a second detector. The first detector is configured to receive the first detection signal from an optical system, and the second detector is configured to receive the second detection signal from the optical system.

In a possible design, the optical system includes a polygon mirror; and the first detection signal is reflected by a first reflective surface of the polygon mirror, and the second detection signal is reflected by a second reflective surface of the polygon mirror.

In a possible design, the optical system may further include a beam splitter, and the first detection signal is further reflected or transmitted by the beam splitter; or the second detection signal is further reflected or transmitted by the beam splitter.

In a possible design, the optical system includes an oscillating mirror. When the oscillating mirror is at a first angle, the first detection signal is reflected by the oscillating mirror; or when the oscillating mirror is at a second angle, the second detection signal is reflected by the oscillating mirror.

According to a third aspect, an embodiment of this application provides a terminal, including the lidar according to any one of the second aspect or the possible designs of the second aspect.

According to a fourth aspect, an embodiment of this application provides a vehicle, including the lidar according to any one of the second aspect or the possible designs of the second aspect.

According to a fifth aspect, an embodiment of this application provides a control apparatus, including at least one processor and an interface circuit, where the interface circuit is configured to provide data or a code instruction for the at least one processor, and the at least one processor is configured to implement the method according to any one of the first aspect or the possible designs of the first aspect by using a logic circuit or executing the code instruction.

According to a sixth aspect, an embodiment of this application provides a chip, including a processor and an interface. The processor is configured to read instructions through the interface, to perform the method according to any one of the first aspect or the possible designs of the first aspect.

According to a seventh aspect, an embodiment of this application provides a computer-readable storage medium. The storage medium stores a computer program or instructions, and when the computer program or the instructions are executed by a communication apparatus, the method according to any one of the first aspect or the possible designs of the first aspect is implemented.

According to an eighth aspect, an embodiment of this application provides a computer program product. When the computer program product runs on a processor, the method according to any one of the first aspect or the possible designs of the first aspect is implemented.

For beneficial effects of the second aspect to the fifth aspect, refer to technical effects that can be achieved by corresponding designs in the first aspect. Details are not described herein again.

### BRIEF DESCRIPTION OF DRAWINGS

FIG. 1 is a schematic diagram of an application scenario according to an embodiment of this application;
FIG. 2 is a schematic diagram of an architecture of a lidar 100 according to an embodiment of this application;
FIG. 3A to FIG. 3C are schematic diagrams of an architecture of a transmitting module 120 according to an embodiment of this application;
FIG. 4 is another schematic diagram of an architecture of a lidar 100 according to an embodiment of this application;
FIG. 5A and FIG. 5B are schematic diagrams of forms of a detection signal sent by a transmitting module 120;
FIG. 6 is a schematic diagram of an architecture of a receiving module according to an embodiment of this application;
FIG. 7A to FIG. 7C are schematic diagrams of an optical system of a lidar 100 according to an embodiment of this application;
FIG. 8 is a schematic diagram of an array structure of a detector according to an embodiment of this application;
FIG. 9A and FIG. 9B are schematic diagrams of working sequences of a first receiving module 131 and a second receiving module 132 according to an embodiment of this application;
FIG. 9C and FIG. 9D are schematic diagrams of working sequences of a transmitting module 120, a first receiving module 131, and a second receiving module 132 according to an embodiment of this application;
FIG. 9E is a schematic diagram of a working sequence of a first receiving module 131 according to an embodiment of this application;
FIG. 9F is a schematic diagram of a working sequence of a second receiving module 132 according to an embodiment of this application;
FIG. 9G is a schematic diagram of a first sub-range and a second sub-range according to an embodiment of this application;
FIG. 10A to FIG. 10E are schematic diagrams of working sequences of a transmitting module 120, a first receiving module 131, and a second receiving module 132 according to an embodiment of this application;
FIG. 11 is another schematic diagram of an architecture of a lidar 100 according to an embodiment of this application; and
FIG. 12 is a flowchart of a control method according to an embodiment of this application.

### DESCRIPTION OF EMBODIMENTS

The technical solutions provided in embodiments of this application may be applied to a terminal device having a detection capability, and in particular, the technical solutions are applicable to a terminal device having a laser detection capability. The terminal device may be an intelligent device having the laser detection capability, including but not limited to: a smart home device, like a television, a floor sweeping robot, a smart lamp, an acoustic system, an intelligent lighting system, an electrical control system, home background music, a home theater system, an intercom system, and a video surveillance system; an intelligent transportation device, like a car, a ship, an uncrewed aerial vehicle, a train, a truck and a truck; and an intelligent manufacturing device, like a robot, an industrial device, intelligent logistics, and a smart factory. Alternatively, the terminal device may be a computer device having the laser detection capability, for example, a desktop computer, a personal computer, or a server. It should be further understood that the terminal device may alternatively be a portable electronic device having the laser detection capability, for example, a mobile phone, a tablet computer, a palmtop computer, a headset, an acoustic device, a wearable device (like a smartwatch), a vehicle-mounted device, a virtual reality device, or an augmented reality device. An example of the portable electronic device includes but is not limited to a portable electronic device using iOS^{®}, Android^{®}, Microsoft^{®}, Harmony^{®}, or another operating system. The portable electronic device may alternatively be, for example, a laptop computer (Laptop) with a touch-sensitive surface (like a touch panel).

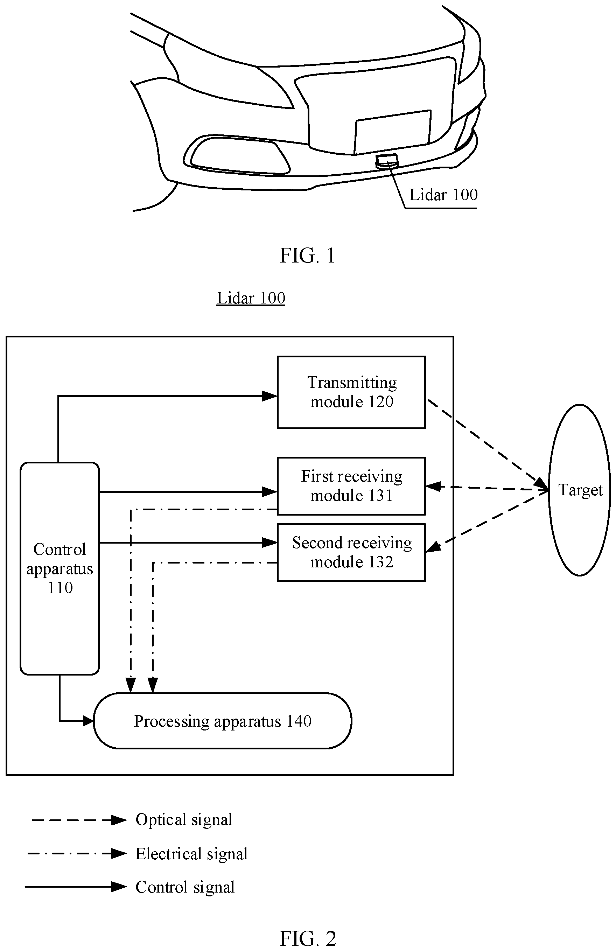

In a specific application scenario, the technical solutions provided in embodiments of this application may be applied to the lidar. FIG. 1 is a schematic diagram of an application scenario of a lidar according to an embodiment of this application. In this example, a lidar 100 is installed on a vehicle, and therefore is also referred to as a vehicle-mounted lidar. In addition to the vehicle-mounted lidar, the lidar also includes a ship-mounted lidar installed on a ship and a machine-mounted lidar installed on a machine. In a possible example, as shown in FIG. 1, the lidar 100 may be specifically installed at a head location of a vehicle. In a driving process of the vehicle, the lidar 100 may send a detection signal (specifically, a laser signal). The detection signal is reflected by an object after being irradiated to the object in front of the vehicle, and a reflected detection signal (also referred to as an echo signal) may be received by the lidar 100, so that the lidar 100 may determine, based on the reflected detection signal, information about an obstacle in front of the vehicle, like a distance, an orientation, a height, a speed, a posture, a size, or a shape of the obstacle. This helps use the information about the obstacle to implement a driving function of the vehicle, including but not limited to autonomous driving or assisted driving.

It should be noted that, in the example shown in FIG. 1, for example, the lidar 100 is installed at the head location of the vehicle. However, during actual application, this is not limited thereto. The lidar 100 may alternatively be installed at another location, for example, a vehicle rear or a vehicle roof.

The lidar 100 provided in this embodiment of this application includes one or more transmitting modules and a plurality of receiving modules. The transmitting module is configured to transmit a detection signal to the outside, and the detection signal reaches a surface of a target and is reflected by a surface of an object, to form an echo signal. The receiving module is configured to receive a detection signal (namely, the echo signal) reflected by the target, and convert the received detection signal from an optical signal into an electrical signal. Point cloud data may be generated by analyzing the electrical signal output by the receiving module. The point cloud data may be used to determine feature information (like a distance, an orientation, a height, a speed, a posture, a size, or a shape) of the target.

In the plurality of receiving modules of the lidar 100, at least two receiving modules have different field of views. The field of view may also be referred to as a field of view. A field of view corresponding to each receiving module determines a view scope of the receiving module, that is, a range in which the receiving module can receive the echo signal. Each receiving module can receive only an echo signal that is reflected by the target and that is within the view scope of the receiving module (it should be understood that the echo signal herein is an effective echo, and does not include a clutter that is refracted through various other paths and that is reflected for a plurality of times). In other words, a larger field of view corresponding to the receiving module indicates a larger coverage area corresponding to an echo signal that can be received by the receiving module. On the contrary, a smaller field of view corresponding to the receiving module indicates a smaller coverage area corresponding to an echo signal that can be received by the receiving module.

Generally, because a photosensitive surface of a detector in the receiving module is limited, the field of view corresponding to the receiving module has a strong anti-correlation relationship with angular resolution or a detection distance (that is, a larger field of view indicates lower angular resolution and a shorter detection distance; and a smaller field of view indicates higher angular resolution and a longer detection distance). Therefore, the at least two receiving modules have different field of views, which may also be described as: the at least two receiving modules have different angular resolution or detection distances.

The lidar 100 provided in this embodiment of this application has at least two receiving modules with different field of views. A receiving module with a larger field of view may enable the lidar to have a larger field of view, and a receiving module with a smaller field of view may enable the lidar to have higher angular resolution and a longer ranging distance. Therefore, by cooperating and using receiving modules with different field of views, the lidar 100 has a high ranging capability, high resolution, and a large field of view at the same time, and requirements in different scenarios can be met.

It should be noted that, the application scenarios described in embodiments of this application are intended to describe the technical solutions in this application more clearly, but constitute no limitation on the technical solutions provided in this application. A person of ordinary skill in the art may learn that the technical solutions provided in this application are also applicable to a similar technical problem as a new application scenario emerges.

To understand the technical solutions in embodiments of this application more clearly, the following describes in detail the lidar 100 provided in embodiments of this application with reference to the accompanying drawings.

FIG. 2 is a schematic diagram of an architecture of a lidar 100 according to an embodiment of this application. In this example, the lidar 100 includes a control apparatus 110, a transmitting module 120, a first receiving module 131, a second receiving module 132, and a processing apparatus 140.

The following describes specific structures and working principles of each component in the lidar 100.

### 1. Transmitter module 120

There may be one or more transmitting modules 120. This is not limited in this application. For ease of description, one is first used as an example herein to describe a basic structure and a working principle of the transmitting module 120.

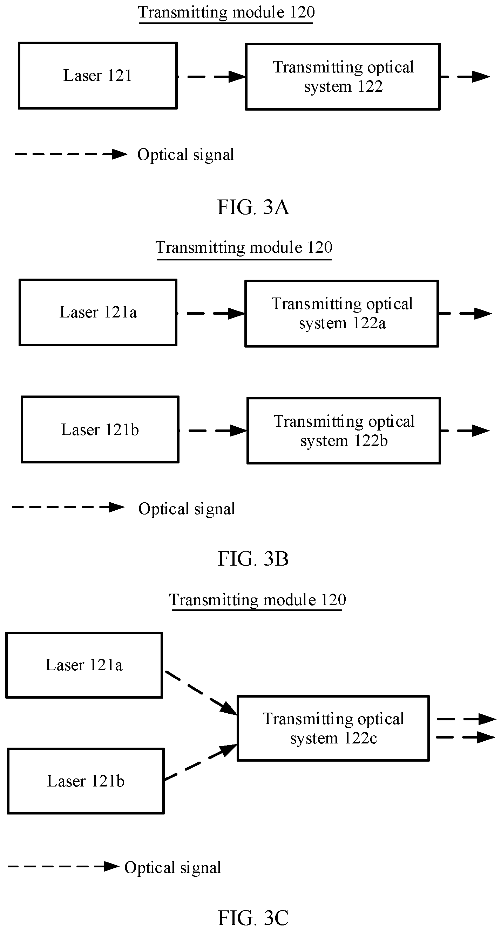

Refer to FIG. 3A. FIG. 3A is a schematic diagram of an architecture of a transmitting module 120. The transmitting module 120 includes a laser 121 and a transmitting optical system 122. The laser 121 is a component capable of emitting a laser, and a type of the laser 121 may be any one of a semiconductor laser, a gas laser, an optical fiber laser, a solid-state laser, a dye laser, a diode laser, an excimer laser, or the like. The laser 121 may send a detection signal (like a pulse laser) under control of a control apparatus 110. The transmitting optical system 122 is a system including an optical element. The optical element includes but is not limited to one or more of a lens, a light filter, a polarizer, a reflector, a beam splitter, a prism, a window plate, a scattering element, or the like. The transmitting optical system 122 may transmit the detection signal from the laser 121. The transmitting optical system 122 may transmit the detection signal under the control of the control apparatus 110, or may be statically set, that is, the transmitting optical system 122 transmits the detection signal without being controlled by the control apparatus 110. This is not specifically limited in this application.

It may be understood that, when there are a plurality of transmitting modules in the lidar 100, each transmitting module includes one laser and a transmitting optical system corresponding to the laser.

It should be noted that, when there are a plurality of transmitting modules in the lidar 100, transmitting optical systems in different transmitting modules may separately use different optical elements (that is, the transmitting optical systems do not share any optical element), or may share some or all optical elements. This is not limited in this embodiment of this application. For example, refer to FIG. 3B. A detection signal emitted by a laser 121a is transmitted through a transmitting optical system 122a, and a detection signal emitted by a laser 121b is transmitted through a transmitting optical system 122b. For example, refer to FIG. 3C. Both the detection signal emitted by the laser 121a and the detection signal emitted by the laser 121b are transmitted through a transmitting optical system 122c.

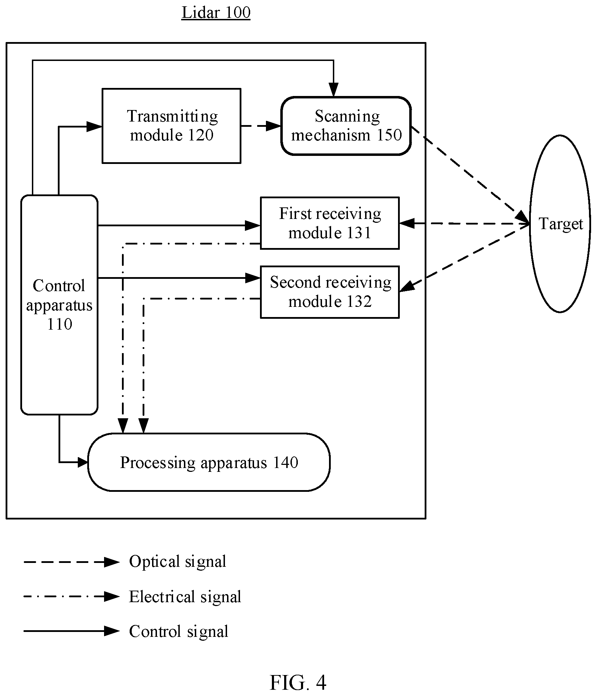

Optionally, refer to FIG. 4. The lidar 100 may further include a scanning mechanism 150. The scanning mechanism 150 may include one or more of a polygon mirror, an oscillating mirror, a micro-electro-mechanical system (micro-electro-mechanical system, MEMS) scanning mirror, a prism, or the like. The scanning mechanism 150 is configured to control an emergent direction of a detection signal, so that the detection signal may reach different regions, to scan and traverse the entire detection region (a target is located in the detection region). It should be noted that, the scanning mechanism 150 is not a mandatory component, and a traversal function that can be implemented by the scanning mechanism 150 may alternatively be essentially implemented by using an array design inside a transmitting module 120, a first receiving module 131, and a second transmitting module 132, and a control apparatus of the array.

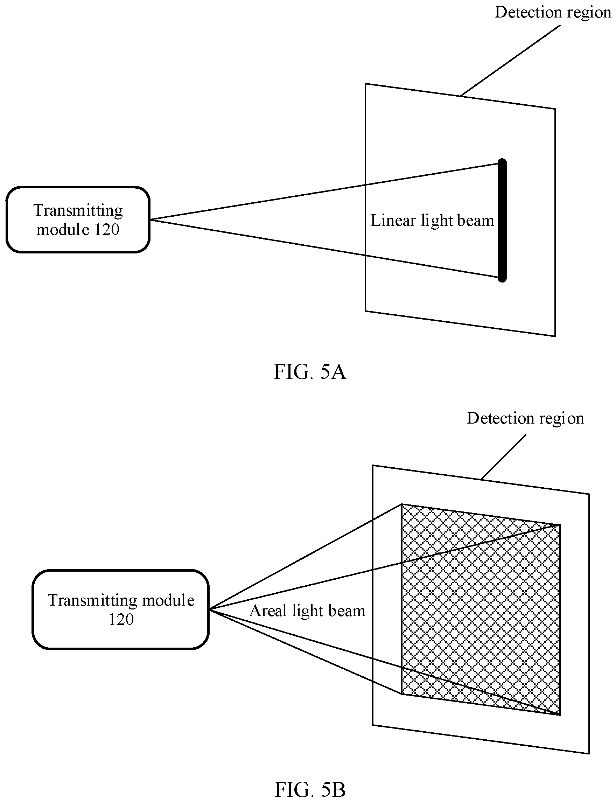

In specific implementation, a detection signal emitted by the transmitting module 120 may alternatively be in a form of a linear light beam (as shown in FIG. 5A, a light spot formed by the light beam in a detection region is a linear light spot). Correspondingly, the scanning mechanism 150 may control an emission direction of the linear light beam, so that the linear light beam traverses the detection region. The detection signal emitted by the transmitting module 120 may alternatively be in a form of an areal light beam (as shown in FIG. 5B, a light spot formed by the light beam in the detection region is a planar light spot).

Further, the transmitting module 120 may send a detection signal that is consecutive in time domain, or may send a detection signal that is inconsecutive in time domain, for example, periodically send a detection signal. This is not limited in this embodiment of this application.

### 2. First receiving module 131 and second receiving module 132

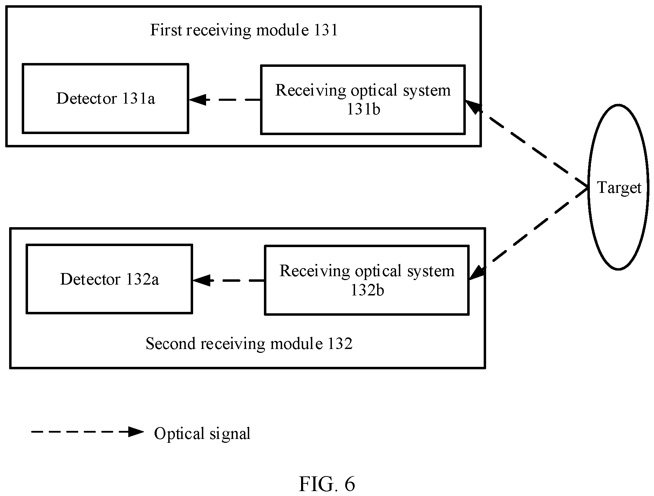

Refer to FIG. 6. The first receiving module 131 includes a detector 131a and a receiving optical system 131b. The receiving optical system 131b is configured to receive a first detection signal returned from a target, and aggregate the received first detection signal on a photosensitive surface of the detector 131a. The detector 131a is configured to convert the first detection signal from an optical signal into an electrical signal, and then transmit the electrical signal to a processing apparatus 140. The second receiving module 132 includes a detector 132a and a receiving optical system 132b. The receiving optical system 132b is configured to receive a second detection signal returned from the target, and aggregate the second detection signal on a photosensitive surface of the detector 132a. The detector 132a is configured to convert the second detection signal from an optical signal into an electrical signal, and then transmit the electrical signal to the processing apparatus 140.

The receiving optical system (for example, the receiving optical system 131b or the receiving optical system 132b) may include one or more optical elements. A type of the optical element includes but is not limited to one or more of a lens, a light filter, a polarizer, a reflector, a polygon mirror, an oscillating mirror, a beam splitter, a prism, a window plate, a scattering element, or the like.

It should be noted that the receiving optical system 131b and the receiving optical system 132b may separately use different optical elements (that is, the receiving optical system 131b and the receiving optical system 132b do not share any optical element), or may share some optical elements (for example, the receiving optical system 131b and the receiving optical system 132b may use different reflective surfaces of a same polygon mirror). This is not limited in this embodiment of this application. Further, the receiving optical system 131b and the receiving optical system 132b may separately use different optical elements with a transmitting optical system 122 (that is, the receiving optical system 131b, the receiving optical system 132b, and the transmitting optical system 122 do not share any optical element), or may share some or all optical elements. This is not limited in this embodiment of this application.

For ease of description, in the following, an entirety including the transmitting optical system 122, the receiving optical system 131b, and the receiving optical system 132b is referred to as an optical system of the lidar 100.

In specific implementation, the optical system of the lidar 100 may be a paraxial architecture, or include both a coaxial architecture and a paraxial architecture. This is not limited in this application. The coaxial architecture refers to a case in which a transmitting optical path and a receiving optical path are arranged in a coaxial manner, and the paraxial architecture refers to a case in which a transmitting optical path and a receiving optical path are arranged on two lines that are parallel to each other, and optical axes of the transmitting optical path and the receiving optical path do not overlap but are parallel. The following uses several possible optical systems as examples.

### Example 1: A paraxial optical system based on the polygon mirror.

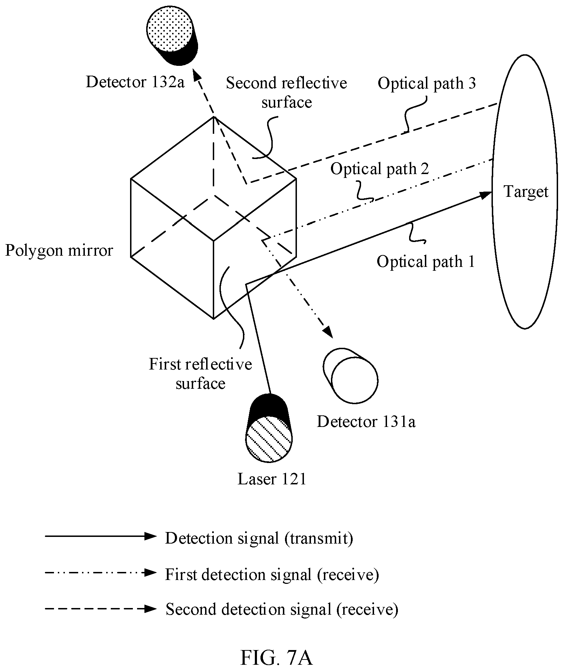

The polygon mirror is a reflector having a plurality of reflective surfaces. As shown in FIG. 7A, two reflective surfaces, namely, a first reflective surface and a second reflective surface, are used as an example. After a detection signal emitted by a laser 121 reaches a target through the polygon mirror, the detection signal is reflected by the target. A part of reflected detection signals (for example, a first detection signal) is reflected by the first reflective surface of the polygon mirror and enters a detector 131a. The other part of the detection signals (for example, a second detection signal) is reflected by the second reflective surface of the polygon mirror and enters a detector 132a.

In FIG. 7A, optical axes of a transmitting optical path (like an optical path 1 shown in FIG. 7A), a receiving optical path of the first detection signal (like an optical path 2 shown in FIG. 7A), and a receiving optical path of the second detection signal (like an optical path 3 shown in FIG. 7A) do not overlap. This belongs to a paraxial case.

It may be understood that FIG. 7A shows only some optical elements on optical paths 1, 2, and 3. During actual application, each optical path may further include other optical elements (for example, a lens, a light filter, a polarizer, a window plate, or a scattering element). Not all of the optical elements are shown in this application.

### Example 2: A paraxial plus coaxial optical system based on the polygon mirror and the beam splitter.

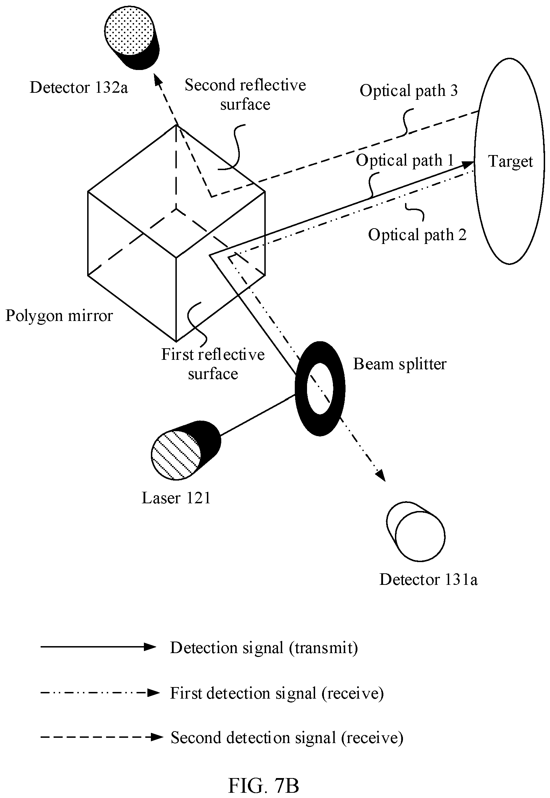

As shown in FIG. 7B, a detection signal emitted by a laser 121 is reflected by the beam splitter, and then reaches a first reflective surface of the polygon mirror, and then is reflected by the first reflective surface. After reaching a target, the detection signal is reflected by the target, and a part of reflected detection signals (for example, a first detection signal) is reflected by the first reflective surface of the polygon mirror, and is transmitted by the beam splitter, and enters a detector 131a, and the other part of the reflected detection signals (for example, a second detection signal) is reflected by a second reflective surface of the polygon mirror, and then enters a detector 132a.

In FIG. 7B, a transmitting optical path (like an optical path 1 shown in FIG. 7B) and a receiving optical path (like an optical path 2 shown in FIG. 7B) of the first detection signal are a coaxial case. A transmitting optical path (like an optical path 1 shown in FIG. 7B) and a receiving optical path (like an optical path 3 shown in FIG. 7B) of the second detection signal are a paraxial case. It should be noted that, the optical path 1 and the optical path 2 should actually overlap. In FIG. 7B, to make the view clearer, the optical path 1 and the optical path 2 are separated by a specific distance.

It may be understood that FIG. 7B shows only some optical elements on optical paths 1, 2, and 3. During actual application, each optical path may further include other optical elements (for example, a lens, a light filter, a polarizer, a window plate, or a scattering element). Not all of the optical elements are shown in this application.

It may be understood that, FIG. 7B is an example in which the detection signal emitted by the laser 121 is reflected by the beam splitter and reaches the polygon mirror, and the first detection signal is transmitted by the beam splitter and enters the detector 131a. During actual application, a person skilled in the art may further properly deform FIG. 7B. For example, it may be set that the detection signal emitted by the laser 121 reaches the polygon mirror after being transmitted by the beam splitter, and the first detection signal enters the detector 131a after being reflected by the beam splitter. In addition, the optical path 1 and the optical path 3 may be set to be coaxial, the optical path 1 and the optical path 2 may be further set to be paraxial, and the like. This is not limited in this application.

### Example 3: A paraxial optical system based on the oscillating mirror.

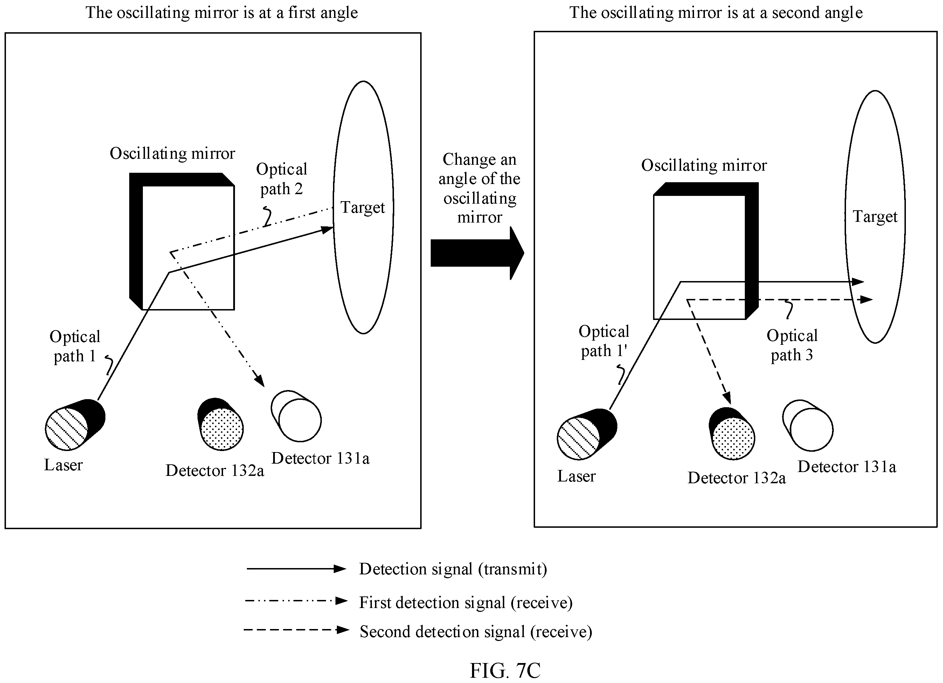

The oscillating mirror may be a reflector whose angle can be changed. For example, the oscillating mirror may rotate around an axis. When the oscillating mirror is at different angles, incident light beams at different angles may be received, or received light beams may be reflected from different angles. As shown in FIG. 7C, when the oscillating mirror is at a first angle, a first detection signal returned from a target is reflected by the oscillating mirror, and enters a detector 131a. When the oscillating mirror is at a second angle, a second detection signal returned from the target is reflected by the oscillating mirror, and enters a detector 132a.

In FIG. 7C, optical axes of a transmitting optical path (like an optical path 1 shown in FIG. 7C) and a receiving optical path of the first detection signal (like an optical path 2 shown in FIG. 7C) do not overlap, which is a paraxial case. Optical axes of a transmitting optical path (like an optical path 1' shown in FIG. 7C) and a receiving optical path of the second detection signal (like an optical path 3 shown in FIG. 7C) do not overlap, which is a paraxial case.

It may be understood that FIG. 7C shows only some optical elements on optical paths 1, 1', 2, and 3. During actual application, each optical path may further include other optical elements (for example, a lens, a light filter, a polarizer, a window plate, or a scattering element). Not all of the optical elements are shown in this application.

It may be understood that FIG. 7C shows only some optical elements on optical paths 1, 2, and 3. During actual application, each optical path may further include other optical elements (for example, a lens, a light filter, a polarizer, a window plate, or a scattering element). Not all of the optical elements are shown in this application.

The foregoing lists several possible implementations of the optical system. Certainly, during actual application, there is another implementation. This is not limited in this application.

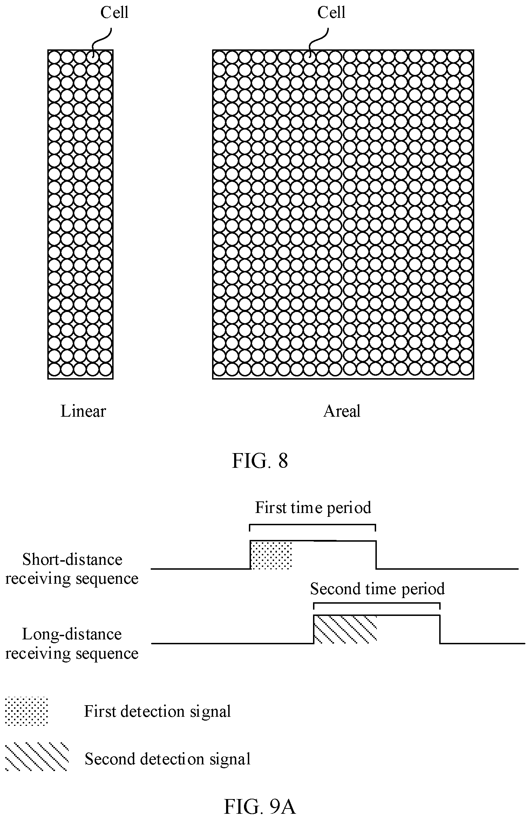

The detector (for example, the detector 131a or the detector 132a) may be an array structure formed by a plurality of rows and a plurality of columns of cells. The cell is a minimum unit that can receive an echo signal in the detector. Based on different laser forms of the transmitting module 120, the array structure of the detector may also have different forms. As shown in FIG. 8, the array structure may be a linear array structure, a planar array structure, or the like. Correspondingly, a lidar 100 may scan a detection region in any one of the following scanning manners: line scanning line receiving, line scanning plane receiving, plane scanning plane receiving, or the like.

In specific implementation, a specific type of the detector includes but is not limited to an avalanche diode (Avalanche Diode, PAD) array, a single photon avalanche diode (Single Photon Avalanche Diode, SPAD) array, a charge-coupled device (Charge-coupled Device, CCD) array, a complementary metal oxide semiconductor (Complementary Metal Oxide Semiconductor, CMOS) sensor array, or the like.

In a use process of the detector, a state of each cell may be a working state or a non-working state. When the cell is in the working state, the cell can convert a received echo signal into an electrical signal. When the cell is in the non-working state, the cell does not convert the echo signal into an electrical signal regardless of whether an echo signal exists on the cell.

In this embodiment of this application, a field of view corresponding to a first receiving module 131 is different from a field of view corresponding to a second receiving module 132. For example, the field of view corresponding to the first receiving module 131 is greater than the field of view corresponding to the second receiving module 132, or the field of view corresponding to the first receiving module 131 is less than the field of view corresponding to the second receiving module 132.

### 3. Processing apparatus 140

The processing apparatus 140 may receive and analyze an electrical signal output by the first receiving module 131, generate point cloud data (for example, first point cloud data) corresponding to the first receiving module 131, and determine feature information of a target based on the first point cloud data.

The processing apparatus 140 may alternatively receive and analyze an electrical signal output by the second receiving module 132, generate point cloud data (for example, the first point cloud data) corresponding to the second receiving module 132, and determine the feature information of the target based on the second point cloud data.

The processing apparatus 140 may alternatively receive and analyze the electrical signal output by the first receiving module 131, generate the point cloud data (for example, the first point cloud data) corresponding to the first receiving module 131, receive and analyze the electrical signal output by the second receiving module 132, generate the point cloud data (for example, the second point cloud data) corresponding to the second receiving module 132, map the first point cloud data and the second point cloud data to a same point cloud image, then determine the feature information of the target based on the point cloud image, and the like.

The feature information of the target includes but is not limited to a distance, an orientation, a height, a speed, a posture, a size, a shape, or the like of the target.

### 4. Control apparatus 110

The control apparatus 110 has a signal control capability. For example, the control apparatus 110 may be connected to other components in the lidar 100 through a controller area network (controller area network, CAN) bus or in another manner, and send a control instruction to the other components to coordinate work of the other components. For example, the control apparatus 110 may control a transmitting module 120 to transmit a detection signal; control a first receiving module 131 and a second transmitting module 132 to receive a detection signal reflected by a target; control the first receiving module 131 and the second transmitting module 132 to process the received detection signal, and output an electrical signal; and control the processing apparatus 140 to analyze electrical signals output by each receiving module, to generate point cloud data, and determine feature information of the target based on the point cloud data corresponding to each receiving module.

In a specific implementation process, the control apparatus 110 and the processing apparatus 140 may be integrated into one component for implementation, or may be separately implemented in a plurality of components.

For example, the control apparatus 110 and the processing apparatus 140 may be integrated into one component for implementation. The component may be specifically an integrated circuit chip, for example, may be a general purpose processor, may be a field programmable gate array (field programmable gate array, FPGA), may be am application-specific integrated chip (application-specific integrated circuit, ASIC), may be a system on chip (system on chip, SoC), may be a network processor (network processor, NP), may be a digital signal processor (digital signal processor, DSP), may be a micro controller unit (micro controller unit, MCU), or may be a programmable logic device (programmable logic device, PLD), or another programmable logic device, a discrete gate or a transistor logic device, a discrete hardware component, or another integrated chip. The component may include a central processing unit (central processing unit, CPU), a neural network processing unit (neural network processing unit, NPU), and a graphics processing unit (graphics processing unit, GPU), and may further include an application processor (application processor, AP), a modem processor, an image signal processor

(image signal processor, ISP), a video codec, a digital signal processor (digital signal processor, DSP), a baseband processor, and/or the like. This is not specifically limited.

The following describes a specific solution in which the lidar 100 cooperates with receiving modules with different field of views.

For ease of understanding, several time types involved in the following are first described herein.
(1) A first time period is a time period in which the first transmitting module 131 is continuously in a working state. In the first time period, the first transmitting module 131 has a signal receiving capability. Provided that a detection signal is reflected from a target in the first time period, the first transmitting module 131 receives the detection signal (namely, a first detection signal) in the first time period. For example, the first time period may be represented as Δt1.
   It may be understood that the first time period may occur once or a plurality of times in time domain. This is not limited in this application. A length of the first time period may be fixed, or may be variable. This is not limited in this application.
(2) A second time period is a time period in which the second transmitting module 132 is continuously in a working state. In the second time period, the second transmitting module 132 has a signal receiving capability. Provided that a detection signal is reflected from a target in the second time period, the second transmitting module 132 receives the detection signal (namely, a second detection signal) in the second time period. For example, the second time period may be represented as Δt2.
   It may be understood that the second time period may occur once or a plurality of times in time domain. This is not limited in this application. A length of the second time period may be fixed, or may be variable. This is not limited in this application.
   It may be understood that distribution of the first time period and the second time period in time domain may overlap, or may not overlap, or may overlap in some time domain locations, and may not overlap in other time domain locations. This is not limited in this application.
(3) A first preset time range is a time range longer than the first time period. In the first preset time range, one or more first time periods may be distributed. The plurality of first time periods may be continuously distributed, or may be discontinuously distributed. This is not limited in this application. For example, the first preset time range may be represented as ΔT1 ≥ n × Δt1, where n ≥ 1.
(4) A second preset time range is a time range longer than the second time period. In the second preset time range, one or a plurality of second time periods may be distributed. The plurality of second time periods may be continuously distributed, or may be discontinuously distributed. This is not limited in this application. For example, the second preset time range may be represented as ΔT2 ≥ m × Δt2, where m ≥ 1.
   It may be understood that distribution of the first preset time range and the second preset time range in time domain may be: all overlapping, partial overlapping, non-overlapping, or the like. This is not limited in this application.
(5) First sub-range and second sub-range: Both the first preset time range and the second preset time range may be further divided into a plurality of sub-ranges. For example, the first preset time range may include the first sub-range, the second sub-range, and the like. The first sub-range and the second sub-range may be continuous or discontinuous in time domain. This is not limited in this application. Further, one or more first time periods may be distributed in the first sub-range, and one or more first sub-time periods may be distributed in the second sub-range. For example, the first sub-range is represented as Δa, and the second sub-range is represented as Δb. In this case, ΔT1 ≥ Δa + Δb, Δa ≥ Δt1, and Δb ≥ Δt1.

In conclusion, the first preset time range may include one or more sub-ranges, and each sub-range may include one or more first time periods. The first receiving module 131 may receive the first detection signal in each first time period. The second preset time range may include one or more sub-ranges, and each sub-range may include one or more second time periods. The second receiving module 132 may receive the second detection signal in each second time period.

For ease of description, the following uses an example in which the field of view corresponding to the first receiving module 131 is greater than the field of view corresponding to the second receiving module 132. For example, the first receiving module 131 is a short-distance detection module and is used for short-distance detection, and the second receiving module 132 is a long-distance detection module and is used for long-distance detection.

In a possible design, when a first region is scanned, the control apparatus 110 controls the second receiving module 132 to receive the second detection signal. When a second region is scanned, the control apparatus 110 controls the first receiving module 131 to receive the first detection signal, and controls the second receiving module 132 not to work. The first region is different from the second region.

That the second receiving module 132 does not work may also be described as that the second receiving module 132 is not started. A specific implementation may be that a receiving optical system 132b in the second receiving module 132 is turned off, a detector 132a in the second receiving module 132 is not powered on, or a detector 132a in the second receiving module 132 is not powered on and not activated, or the like.

When the first region is scanned, the second receiving module 132 with a smaller field of view may be used to obtain more detailed information of the first region. However, when scanning is performed on a non-second region, the first receiving module 131 with a larger field of view is used, and a detection range is larger, so that detection on the second region is more comprehensive.

In another possible design, when a first region is scanned, the control apparatus 110 controls the first receiving module 131 to receive the first detection signal, and controls the second receiving module 132 to receive the second detection signal. When a second region is scanned, the control apparatus 110 controls the first receiving module 131 to receive the first detection signal, and controls the second receiving module 132 not to work. The first region is different from the second region. When the first region is scanned, the second receiving module 132 with a smaller field of view and the first receiving module 131 with a larger field of view are used at the same time, so that more detailed information of the first region can be obtained. When a non-second region is scanned, the first receiving module 131 with a larger field of view is used, so that a detection range is larger, and detection on the second region is more comprehensive.

Optionally, the first region may be a region of interest (Region Of Interest, ROI), and the second region is a non-region of interest. The region of interest is a region that needs to be focused on, and more detailed information needs to be obtained. For example, the region of interest is a central region in the detection region. The non-region of interest is a region other than the region of interest in the detection region. In this way, angle resolution of the region of interest can be effectively improved, and a detection distance is increased.

In a possible design, the control apparatus 100 may control working sequences of the transmitting module 120, the first receiving module 131, and the second receiving module 132, to implement cooperative use of the first receiving module 131 and the second receiving module 132.

For example, the first receiving module 131 receives the first detection signal in the first time period, and the second receiving module 132 receives the second detection signal in the second time period.

It may be understood that, provided that time at which the first receiving module 131 receives the first detection signal is within the first time period, it is considered that the first receiving module 131 receives the first detection signal in the first time period. In other words, the first receiving module 131 may always receive the first detection signal in the first time period, or may receive the first detection signal only in part of time of the first time period. This is not limited in this application. Provided that time at which the second receiving module 132 receives the second detection signal is within the second time period, it is considered that the second receiving module 132 receives the second detection signal in the second time period. In other words, the second receiving module 132 may always receive the second detection signal in the second time period, or may receive the second detection signal only in part of time of the second time period.

### This is not limited in this application.

It may be understood that, because the receiving module needs specific time to process a signal, time at which the receiving module is in the working state is generally longer than receiving time of the signal. For example, in FIG. 9A, receiving time of the first detection signal is a former part of time of the first time period, and receiving time of the second detection signal is a former part of time of the second time period.

In a specific implementation process, to enable the first receiving module 131 to receive the first detection signal in the first time period, the control apparatus 110 needs to control the first receiving module 131 to be in the working state in the first time period, that is, the first receiving module 131 has a capability of receiving the first detection signal in the first time period.

A specific implementation in which the control apparatus 110 controls the first receiving module 131 to be in the working state in the first time period includes but is not limited to the following several types: (1) The detector 131a is in a power-on state in the first time period; (2) In the first time period, a receiving function of the detector 131a is in an activated state; and (3) In the first time period, the receiving optical system 131b is in an open state.

Similarly, if the second receiving module 132 needs to receive the second detection signal in the second time period, the control apparatus 110 needs to control the second receiving module 132 to be in the working state in the second time period. For an implementation in which the control apparatus 110 controls the second receiving module 132 to be in the working state in the second time period, refer to the implementation in which the control apparatus 110 controls the first receiving module 131 to be in the working state in the first time period. Details are not described herein again.

In a possible design, the first time period is different from the second time period. That is, the first receiving module 131 and the second receiving module 132 are in different time periods.

In a specific example, the first time period and the second time period partially overlap. As shown in FIG. 9A, a latter part of the first time period overlaps a former part of the second time period.

It may be understood that each receiving module does not respond to another signal in a signal processing process. Therefore, although the first time period and the second time period overlap, the second detection signal may also exist in the first time period, but because the first receiving module 131 is already processing the first detection signal, the first receiving module 131 does not process the second detection signal.

It may be understood that FIG. 9A is merely an example, and actually, a latter part of the second time period may alternatively overlap a former part of the first time period. This is not limited in this application.

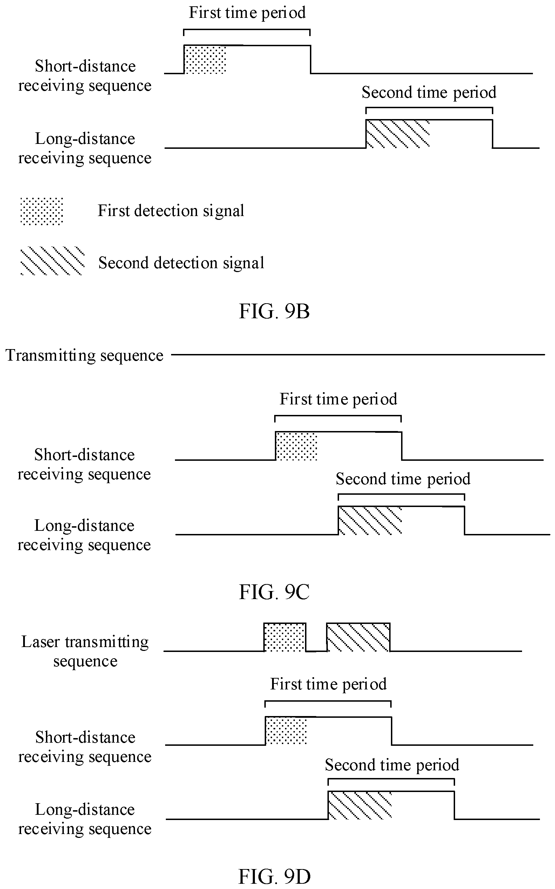

In another specific example, the first time period and the second time period do not overlap. As shown in FIG. 9B, there is a time length between the first time period and the second time period.

It may be understood that, in the accompanying drawings (as shown in FIG. 9A or FIG. 9B) provided in this specification, a short-distance receiving sequence represents a working sequence of the first receiving module 131, and high-level duration of the first receiving module 131 is the first time period. The first receiving module 131 is in the working state, has a capability of receiving a detection signal, and may receive the first detection signal. During low-level duration, the first receiving module 131 is not in the working state, and does not receive a detection signal. A long-distance receiving sequence represents a working sequence of the second receiving module 132, and high-level duration of the second receiving module 132 is the second time period. The second receiving module 132 is in the working state, has a capability of receiving a detection signal, and may receive the second detection signal. During low-level duration, the second receiving module 132 is not in the working state, and does not receive a detection signal.

It may be understood that, in the accompanying drawings (as shown in FIG. 9A or FIG. 9B) provided in this specification, for ease of understanding, different patterns are used to distinguish the first detection signal and the second detection signal, but the first detection signal and the second detection signal may be essentially a same type of laser signal.

Further, to implement that the first receiving module 131 receives the first detection signal in the first time period and the second receiving module 132 receives the second detection signal in the second time period, the control apparatus 110 further needs to control the transmitting module 120 to be in the working state in the first time period and the second time period, that is, transmit the first detection signal in the first time period to the outside and transmit the second detection signal in the second time period to the outside.

In a possible design, the transmitting module 120 may be always in the working state, that is, transmit a detection signal that is consecutive in time domain, so that the first detection signal exists in the first time period, and the second detection signal exists in the second time period. For example, as shown in FIG. 9C, a transmit sequence is always in a high-level state, indicating that the transmitting module 120 continuously transmits the detection signal.

In another possible design, a working sequence of the transmitting module 120, a working sequence of the first receiving module 131, and a working sequence of the second receiving module 132 are synchronized by a same clock in the control apparatus 110. The control apparatus 100 may control the working sequence of the transmitting module 120 to be corresponding to the working sequence of the first receiving module 131 and the working sequence of the second receiving module 132. As shown in FIG. 9D, the transmitting module 120 transmits the first detection signal in the first time period, and transmits the second detection signal in the second time period, but does not transmit a detection signal outside the first time period and the second time period.

It may be understood that, in FIG. 9C and FIG. 9D, an example in which the first time period and the second time period partially overlap is used to describe a design of the working sequence of the transmitting module 120. For a case in which the first time period and the second time period do not overlap, a similar design may also be used for the working sequence of the transmitting module 120.

In a possible design, the control apparatus 110 may further configure the first time period to appear within a first preset time range according to a first rule, and configure the second time period to appear within a second preset time range according to a second rule. The first preset time range and the second preset time range may be the same, or may be different. This is not limited in this application.

The first rule may be that the first time period appears in the first preset time range and presents a specific rule, and the second rule may be that the second time period appears in the second preset time range and presents a specific rule.

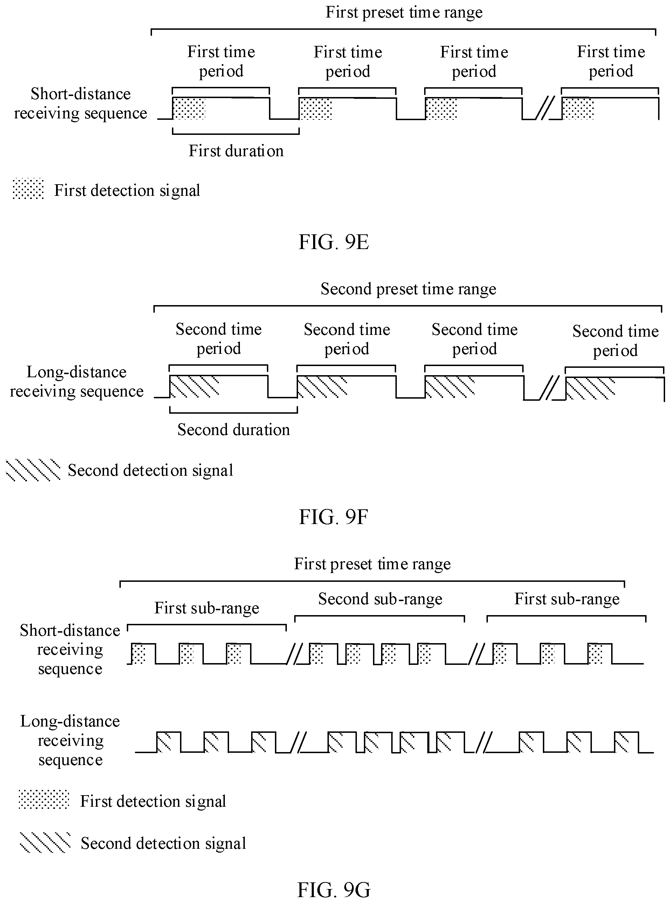

In a specific example, the first rule is using first duration as a periodicity, where the first duration is less than the first preset time range. In other words, there may be a plurality of first time periods in the first preset time range, the plurality of first time periods are periodically distributed in the first preset time range, and a periodicity is the first duration, as shown in FIG. 9E. Alternatively, the second rule is using second duration as a periodicity, where the second duration is less than the second preset time range. In other words, there may be a plurality of second time periods in the second preset time range, the plurality of second time periods are periodically distributed in the second preset time range, and a periodicity is the second duration, as shown in FIG. 9F. It may be understood that the first duration and the second duration may be the same or may be different. This is not limited in this application. Specific values of the first duration and the second duration may be set by a person skilled in the art based on a requirement. This is not limited in this application.

In a specific example, the first preset time range may be duration of N frames, where N is a positive integer. Duration required by a lidar 100 to traverse a detection region once is duration of one frame, and point cloud data obtained by the lidar 100 by traversing the detection region once is one frame of point cloud data.

In a specific example, the first preset time range is the same as the second preset time range. The first preset time range includes at least one first sub-range and at least one second sub-range. The first rule may be that a receiving frequency of a first detection signal in the at least one first sub-range is lower than a receiving frequency of a first detection signal in the at least one second sub-range; and/or the second rule is that a receiving frequency of a second detection signal in the at least one first sub-range is lower than a receiving frequency of a second detection signal in the at least one second sub-range. The receiving frequency of the first detection signal may be a quantity of times that the first time period appears in unit duration, and the receiving frequency of the second detection signal may be a quantity of times that the second time period appears in the unit duration. The unit duration may be set based on a requirement, for example, N timeslot, where N is greater than or equal to 1, and one frame includes a plurality of timeslots.

For example, refer to FIG. 9G. A first preset time range includes two first sub-ranges and one second sub-range. A frequency at which a first receiving module 131 receives a first detection signal in the first sub-range is lower than a frequency at which the first receiving module 131 receives the first detection signal in the second sub-range, and a frequency at which a second receiving module 132 receives a second detection signal in the second sub-range is lower than a frequency at which the second receiving module 132 receives the second detection signal in the second sub-range. Certainly, FIG. 9G is merely an example of the first sub-range and the second sub-range, and is not specifically limited. During actual application, there may be another specific design manner.

In this way, a detection signal received by a lidar 100 from a target in the second sub-range is greater than a detection signal received from a target in the first sub-range. For example, when the lidar scans a region of interest in the second sub-range, more detailed information of the region of interest may be obtained.

Certainly, the foregoing is merely an example rather than a limitation on a first rule and a second rule. In specific application, a control apparatus 110 may further configure a first time period and a second time period to present another rule. For example, there is an interval of X second time period between every two adjacent first time periods, where X is a positive integer. Using X = 2 as an example, A represents the first time period, and B represents the second time period. In this case, the first time period and the second time period follow the following rule in time domain: ABBABBABBABB...

It may be understood that the foregoing design manners may be separately implemented, or may be implemented in combination with each other. This is not limited in this embodiment of this application.

To better understand the technical solutions of this application, the following further lists several possible sequence design solutions.

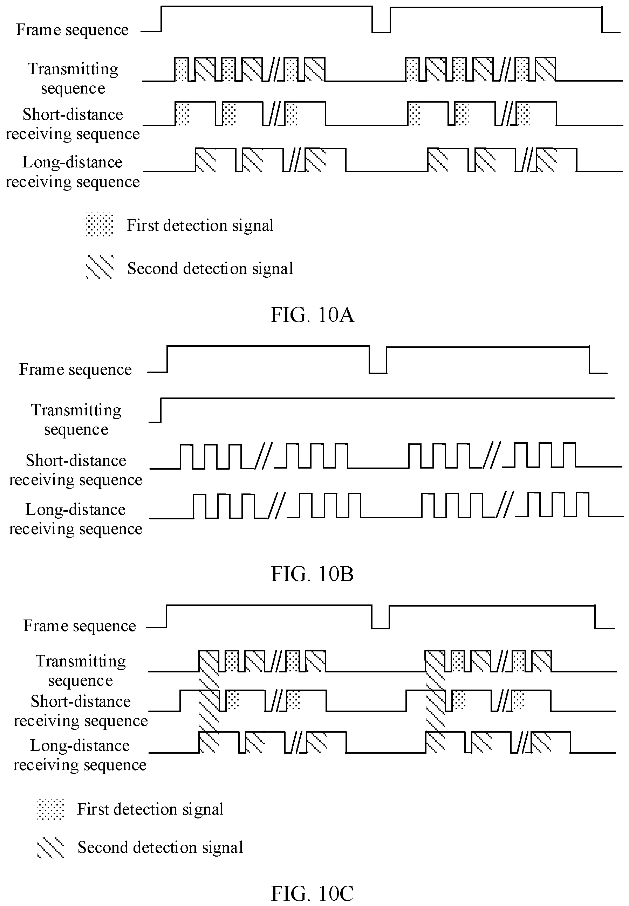

Example 1: As shown in FIG. 10A, in each frame, a transmitting module 120 periodically and alternately sends a group of two laser pulses, which are respectively used for short-distance measurement and long-distance measurement. When the transmitting module 120 sends a short-distance laser pulse (namely, a first detection signal), a short-distance receiving module (namely, a first receiving module 131) corresponding to the transmitting module 120 is enabled synchronously (that is, enters a working state and has a capability of receiving a detection signal), and the short-distance receiving module may receive a short-distance laser pulse reflected by a target. When the transmitting module 120 sends a long-distance laser pulse (namely, a second detection signal), a long-distance receiving module (like a second receiving module 131) corresponding to the transmitting module 120 is enabled synchronously, the long-distance receiving module may receive a long-distance laser pulse reflected by a target. Wave positions between a short-distance receiving sequence and a long-distance receiving sequence partially overlap.

It may be understood that, because the wave positions between the short-distance receiving sequence and the long-distance receiving sequence partially overlap, when the transmitting module 120 transmits the long-distance laser pulse, the short-distance receiving module may be still in an open state. However, at this moment, the short-distance receiving module is triggered by the previously received short-distance laser pulse, and in a period of time after responding to the short-distance laser pulse, the short-distance receiving module no longer has a capability of responding to another laser pulse (for example, for a SPAD detector, after a photon is responded to, there is a period of dead time (dead time), and other photons are not responded to within the dead time), and therefore does not respond to a subsequent long-distance laser pulse, which is equivalent to not receiving the long-distance laser pulse. For example, in the short-distance receiving sequence shown in FIG. 10A, during duration of a first high level of the short-distance receiving sequence, the long-distance laser pulse exists in a latter part of time. However, because the short-distance receiving module is triggered by the short-distance laser pulse in a former part of time, the short-distance receiving module is not triggered by the long-distance laser pulse any more. Similarly, when the transmitting module 120 transmits the short-distance laser pulse, the long-distance receiving module may be still in the open state. However, because the long-distance receiving module is triggered by the previously received long-distance laser pulse, the long-distance receiving module does not respond to a subsequent short-distance laser pulse, which is equivalent to not receiving the short-distance laser pulse.

It should be noted that the foregoing is merely an example. During actual application, in addition to an operating feature of the detector, there may be another reason (for example, performance and an operating mechanism of another component in the receiving module) that causes the receiving module to not respond to the laser pulse at some time even if the receiving module is in the open state. This is not limited in this application.

In addition, due to the performance and operating mechanism of the component, the synchronization described in this specification may allow a specific time deviation. For example, provided that a time difference between a moment at which the transmitting module 120 emits the short-distance laser pulse and a moment at which the short-distance receiving module is turned on is less than a threshold, it may be considered that when the transmitting module 120 emits the short-distance laser pulse, a corresponding short-distance receiving module is simultaneously turned on.

Example 2: As shown in FIG. 10B, a transmitting module 120 continuously transmits a laser pulse. In each frame, when a long-distance receiving module (namely, a second receiving module 132) is turned on, a short-distance receiving module (namely, a first receiving module 131) is turned off. When the short-distance receiving module (namely, the first receiving module 131) is turned on, the long-distance receiving module (namely, the second receiving module 132) is turned off, so that a sequence of a long-distance laser pulse and a sequence of a short-distance laser pulse is just staggered by one wave position. In this way, spatial sampling precision of a lidar 100 can be improved.

Example 3: In a part of time, a short-distance receiving module and a long-distance receiving module simultaneously receive a laser pulse, and in another time, the short-distance receiving module and the long-distance receiving module do not simultaneously receive the laser pulse. As shown in FIG. 10C, on the basis of Example 1, in a first periodicity of each frame, a control apparatus 110 controls the transmitting module 120 to send only one laser pulse, for example, a long-distance laser pulse. In this way, when the laser pulse in the first periodicity arrives, both the short-distance receiving module and a laser pulse module are in an open state, and before that, neither the short-distance receiving module nor the laser pulse module is triggered by the laser pulse. Therefore, the short-distance receiving module and the laser pulse module may receive the long-distance laser pulse at the same time, however, in another periodicity, the transmitting module 120 sequentially sends a laser pulse used for short-distance measurement and a laser pulse used for long-distance measurement, and the short-distance receiving module and the long-distance receiving module respectively receive corresponding laser pulses.

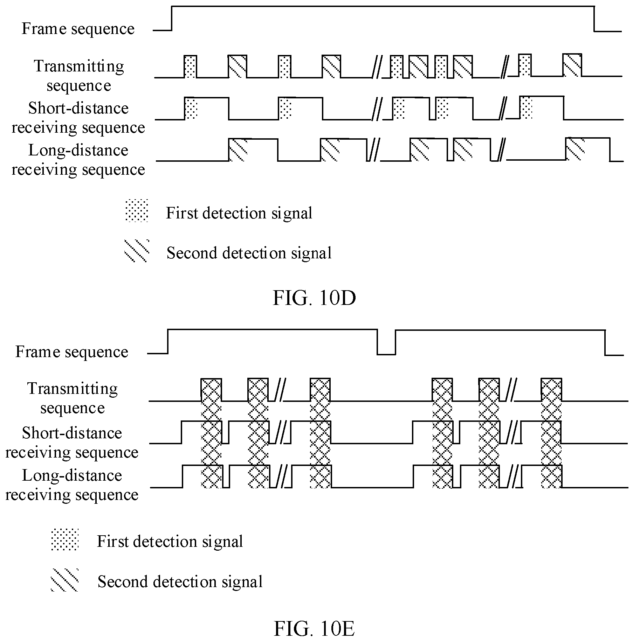

Example 4: As shown in FIG. 10D, in each frame, a transmitting module 120 sequentially sends a group of two laser pulses for a plurality of times, and each group of two laser pulses are respectively used for short-distance measurement and long-distance measurement. When the transmitting module 120 sends a short-distance laser pulse (namely, a first detection signal), a short-distance receiving module (namely, a first receiving module 131) corresponding to the transmitting module 120 is enabled synchronously, and the short-distance receiving module may receive the short-distance laser pulse reflected by a target. When the transmitting module 120 sends a long-distance laser pulse (namely, a second detection signal), a long-distance receiving module (for example, a second receiving module 131) corresponding to the transmitting module 120 is enabled synchronously, the long-distance receiving module may receive the long-distance laser pulse reflected by a target. In a same frame, in a start time period and an end time period, a frequency of a laser pulse sent by the transmitting module 120 is low, and a sequence of the long-distance laser pulse and a sequence of the short-distance laser pulse are exactly staggered by one wave position. In a middle time period, a frequency of a laser pulse sent by the transmitting module 120 is high, and wave positions of the sequence of the long-distance laser pulse and the sequence of the short-distance laser pulse partially overlap. In this way, a lidar can obtain more point cloud data in the middle time period than in the start time period/end time period. For example, when duration of one frame is duration required by a lidar 100 to traverse a detection region once, the middle time period is exactly time for the lidar 100 to scan a central region of the detection region, and the central region is generally a region of interest. Therefore, this design can effectively increase angular resolution of point cloud data of the region of interest.

It should be understood that, during actual application, a time period in which the lidar 100 scans the central region of the detection region is not limited to a middle time period of one frame, and the region of interest is not limited to the central region of the detection region. FIG. 10D is merely an example. Actually, there may be another design manner.

Example 5: As shown in FIG. 10E, a transmitting module 120 periodically transmits a laser pulse. In a same frame, when the transmitting module 120 transmits the laser pulse, both a long-distance receiving module and a short-distance receiving module enable receiving of a detection signal, and wave positions of the long-distance receiving module (namely, a second receiving module 132) and the short-distance receiving module (namely, a first receiving module 131) completely overlap.

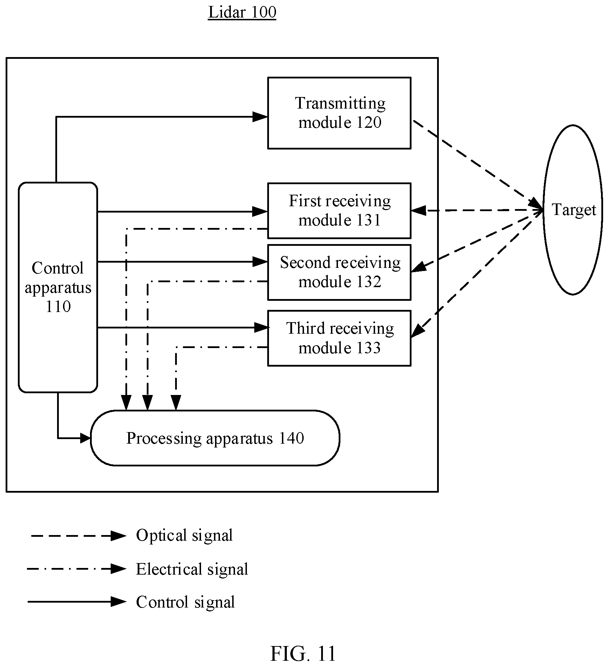

The foregoing uses an example in which a lidar 100 includes two receiving modules. In a specific implementation process, the lidar may further include more receiving modules. For example, as shown in FIG. 11, in addition to a first receiving module 131 and a second receiving module 132, the lidar 100 further includes a third receiving module 133.

A field of view corresponding to the first receiving module 131, a field of view corresponding to the second receiving module 132, and a field of view corresponding to the third receiving module 133 are all different; or a field of view corresponding to the first receiving module 131 is different from a field of view corresponding to the second receiving module 132, and a field of view corresponding to the third receiving module 133 is the same as the field of view corresponding to the first receiving module 131 or the field of view corresponding to the second receiving module 132. Alternatively, a field of view corresponding to the first receiving module 131 is different from a field of view corresponding to the third receiving module 133, and a field of view corresponding to the second receiving module 132 is the same as the field of view corresponding to the first receiving module 131 or the field of view corresponding to the third receiving module 133. Alternatively, a field of view corresponding to the second receiving module 132 is different from a field of view corresponding to the third receiving module 133, and a field of view corresponding to the first receiving module 131 is the same as the field of view corresponding to the second receiving module 132 or the field of view corresponding to the third receiving module 133.

For a specific design of the third receiving module 133, refer to the specific design of the first receiving module 131 or the second receiving module 132. Details are not described herein again.

It may be understood that shapes and sizes of the components in the foregoing accompanying drawings do not reflect real proportions, and are merely intended to illustrate content of this application.

In addition, the foregoing descriptions are merely some embodiments of this application, and a person of ordinary skill in the art can derive other drawings from the accompanying drawings without creative efforts.

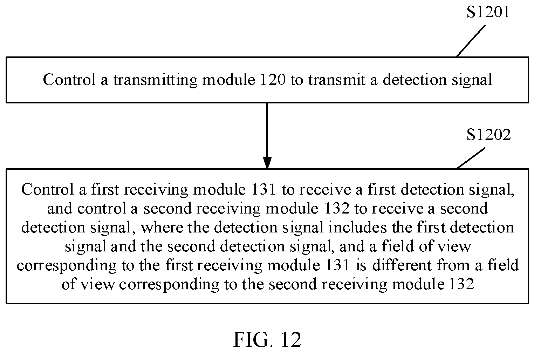

Based on a same technical concept, an embodiment of this application further provides a control method, applied to a lidar 100. The lidar 100 includes a transmitting module 120 and at least two receiving modules, and the at least two receiving modules include a first receiving module 131 and a second receiving module 132. Refer to FIG. 12. The method includes the following steps.

S1201: Control the transmitting module 120 to transmit a detection signal.

S1202: Control the first receiving module 131 to receive a first detection signal, and control the second receiving module 132 to receive a second detection signal, where the detection signal includes the first detection signal and the second detection signal, and a field of view corresponding to the first receiving module 131 is different from a field of view corresponding to the second receiving module 132.

For specific implementations of steps S1201 and S1202 in the foregoing method, refer to specific implementations of corresponding method steps implemented by a control apparatus 110 in the foregoing lidar 100. Details are not described herein again.

Based on a same technical concept, an embodiment of this application further provides a terminal, including the lidar 100 described above. The terminal may be applied to an intelligent transportation device (for example, a car, a ship, an uncrewed aerial vehicle, a train, a truck, or a truck), a smart home device (for example, a television or a floor sweeping robot), an intelligent manufacturing device (for example, a robot, an industrial device, or an intelligent logistics device), or the like.

Based on a same technical concept, an embodiment of this application further provides a vehicle, including the lidar 100 described above.

Based on a same technical concept, an embodiment of this application further provides a control apparatus, including at least one processor and an interface circuit. The interface circuit is configured to provide data or a code instruction for the at least one processor, and the at least one processor is configured to implement, by using a logic circuit or executing the code instruction, the method performed by the control apparatus 110 in the foregoing lidar 100.

Based on a same technical concept, an embodiment of this application further provides a chip, including a processor and an interface. The processor is configured to read instructions through the interface, to perform the method performed by the control apparatus 110 in the foregoing lidar 100.

Based on a same technical concept, an embodiment of this application further provides a computer-readable storage medium. The storage medium stores a computer program or instructions. When the computer program or the instructions are executed by a communication apparatus, the method performed by the control apparatus 110 in the foregoing lidar 100 is implemented.

Based on a same technical concept, an embodiment of this application further provides a computer program product. When the computer program product runs on a processor, the method performed by the control apparatus 110 in the foregoing lidar 100 is implemented.

A person skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the protection scope of this application. This application is intended to cover these modifications and variations of this application provided that they fall within the scope of protection defined by the following claims and their equivalent technologies.

## Claims

1. A control method, applied to a lidar, wherein the lidar comprises a transmitting module and at least two receiving modules, and the at least two receiving modules comprise a first receiving module and a second receiving module; and
the method comprises:
controlling the transmitting module to transmit a detection signal; and
controlling the first receiving module to receive a first detection signal, and controlling the second receiving module to receive a second detection signal, wherein the detection signal comprises the first detection signal and the second detection signal, and a field of view corresponding to the first receiving module is different from a field of view corresponding to the second receiving module.

2. The method according to claim 1, wherein the controlling the first receiving module to receive a first detection signal, and controlling the second receiving module to receive a second detection signal comprises:
controlling the first receiving module to receive the first detection signal in a first time period; and
controlling the second receiving module to receive the second detection signal in a second time period.

3. The method according to claim 2, wherein the first time period is the same as the second time period, or the first time period is different from the second time period.

4. The method according to claim 3, wherein
the first time period and the second time period partially overlap; or
the first time period and the second time period do not overlap.

5. The method according to any one of claims 2 to 4, wherein the method further comprises:
configuring the first time period to appear within a first preset time range according to a first rule, and configuring the second time period to appear within a second preset time range according to a second rule.

6. The method according to claim 5, wherein
the first rule is using first duration as a periodicity; and/or
the second rule is using second duration as a periodicity, wherein
the first duration is the same as or different from the second duration.

7. The method according to claim 5, wherein the first preset time range is the same as the second preset time range, and the first preset time range comprises at least one first sub-range and at least one second sub-range, wherein
the first rule is that a receiving frequency of the first detection signal in the at least one first sub-range is lower than a receiving frequency of the first detection signal in the at least one second sub-range; and/or
the second rule is that a receiving frequency of the second detection signal in the at least one first sub-range is lower than a receiving frequency of the second detection signal in the at least one second sub-range.

8. The method according to any one of claims 2 to 7, wherein the controlling the transmitting module to transmit a detection signal comprises:
controlling the transmitting module to transmit a detection signal that is consecutive in time domain; or
controlling the transmitting module to transmit the first detection signal in the first time period, and controlling the transmitting module to transmit the second detection signal in the second time period, wherein the first time period is different from the second time period.

9. The method according to claim 1, wherein the field of view corresponding to the first receiving module is greater than the field of view corresponding to the second receiving module; and
the method further comprises:
when scanning a first region, controlling the first receiving module to receive the first detection signal, and controlling the second receiving module to receive the second detection signal; and
when scanning a second region, controlling the first receiving module to receive the first detection signal, and controlling the second receiving module not to work, wherein
the first region is different from the second region.

10. The method according to any one of claims 1 to 9, wherein
the transmitting module is one transmitting module, and the controlling the transmitting module to transmit a detection signal comprises: controlling the transmitting module to transmit the first detection signal and the second detection signal; or
the transmitting module comprises a first transmitting module and a second transmitting module, and the controlling the transmitting module to transmit a detection signal comprises:
controlling the first transmitting module to transmit the first detection signal, and controlling the second transmitting module to transmit the second detection signal.

11. The method according to any one of claims 1 to 9, wherein the first receiving module comprises a first detector, and the second receiving module comprises a second detector; and
the controlling the first receiving module to receive the first detection signal, and controlling the second receiving module to receive the second detection signal comprises:
controlling the first detector to receive the first detection signal from an optical system, and controlling the second detector to receive the second detection signal from the optical system.

12. The method according to claim 11, wherein the optical system comprises a polygon mirror; and
the first detection signal is reflected by a first reflective surface of the polygon mirror, and the second detection signal is reflected by a second reflective surface of the polygon mirror.

13. The method according to claim 12, wherein the optical system further comprises a beam splitter; and
the first detection signal is further reflected or transmitted by the beam splitter; or the second detection signal is further reflected or transmitted by the beam splitter.

14. The method according to claim 11, wherein the optical system comprises an oscillating mirror; and
when the oscillating mirror is at a first angle, the first detection signal is reflected by the oscillating mirror; or when the oscillating mirror is at a second angle, the second detection signal is reflected by the oscillating mirror.

15. A lidar, comprising:
a control apparatus, configured to perform the method according to any one of claims 1 to 14;
a transmitting module, configured to transmit a detection signal;
a first receiving module, configured to receive a first detection signal; and
a second receiving module, configured to receive a second detection signal, wherein the detection signal comprises the first detection signal and the second detection signal, and a field of view corresponding to the first receiving module is different from a field of view corresponding to the second receiving module.

16. The lidar according to claim 15, wherein
the transmitting module is one transmitting module, and the transmitting module to transmit a detection signal comprises: controlling the transmitting module to transmit the first detection signal and the second detection signal; or
the transmitting module comprises a first transmitting module and a second transmitting module, and the controlling the transmitting module to transmit a detection signal comprises: controlling the first transmitting module to transmit the first detection signal.

17. The lidar according to claim 15 or 16, wherein the first receiving module comprises a first detector, and the second receiving module comprises a second detector; and
the first detector is configured to receive the first detection signal from an optical system, and the second detector is configured to receive the second detection signal from the optical system.

18. The lidar according to claim 17, wherein the optical system comprises a polygon mirror; and
the first detection signal is reflected by a first reflective surface of the polygon mirror, and the second detection signal is reflected by a second reflective surface of the polygon mirror.

19. The lidar according to claim 17, wherein the optical system further comprises a beam splitter; and
the first detection signal is further reflected or transmitted by the beam splitter; or the second detection signal is further reflected or transmitted by the beam splitter.

20. The lidar according to claim 17, wherein the optical system comprises an oscillating mirror; and
when the oscillating mirror is at a first angle, the first detection signal is reflected by the oscillating mirror; or when the oscillating mirror is at a second angle, the second detection signal is reflected by the oscillating mirror.

21. A terminal, comprising the lidar according to any one of claims 15 to 20.

22. A vehicle, comprising the lidar according to any one of claims 15 to 20.

23. A computer-readable storage medium, wherein the storage medium stores a computer program or instructions, and when the computer program or the instructions are executed by a communication apparatus, the method according to any one of claims 1 to 14 is implemented.
